# EUROPEAN PATENT APPLICATION

(11) **EP 4 471 580 A1**
(43) Date of publication of application: **04.12.2024**
(21) Application number: 24168214.5
(22) Date of filing: 03.04.2024
(51) Int. Cl.: G06F 8/71, G05B 19/042

(54) **METHOD AND SYSTEM FOR VERSION MANAGEMENT IN DISTRIBUTED CONTROL SYSTEMS**

(30) Priority: 29.05.2023 IN 202341037106
(71) Applicant: ABB Schweiz AG, 5400 Baden (CH)
(72) Inventor: C S, Shreeranjini, 560048 Bangalore (IN); JETLEY, Raoul, 560048 Bangalore (IN); HAGBERG, Ulf, 22468 Lund (SE); THILDERKVIST, Hans, 21437 Malmö (SE)
(74) Representative: Zimmermann & Partner Patentanwälte mbB

(57) **Abstract**

The present disclosure relates to method of version management for Distributed Control Systems (DCSs). The method comprises retrieving source files related to objects corresponding to a function of a device of a DCS from a data repository associated with the DCS, based on receiving a request from users associated with the DCS. Further, the method comprises retrieving versions of the source files, from model services corresponding to the source files. Furthermore, the method comprises executing operations for the device of the DCS based on user inputs. The operations are executed based on the source files from the data repository and the versions from the one or more model services. Thereafter, the method comprises managing the versions of the source files based on execution of the operations.

## Description

### TECHNICAL FIELD

The present disclosure generally relates to distributed control systems (DCSs). More particularly, the present disclosure relates to version management for DCSs.

### BACKGROUND

Distributed Control Systems (DCS) are widely used in industrial automation and process control to monitor and control various processes. DCS systems have been in use for many years, and management of configuration data for the same has been a critical aspect therein. A DCS consists of several subsystems, such as controllers, devices, network, history logs, operator interfaces, and the like. Herein, all such subsystems needs to be configured for simultaneous functioning in controlling a plant. Since DCS systems may be engineered by multiple teams (each having many engineers), several branches (i.e., sources of engineering data) must be created and managed by a version management tool. Such integration of work done by the multiple teams may often be complex and error prone.

Despite the development of various version management solutions for DCS, existing systems have significant drawbacks The currently available systems do not offer integrated version management for DCS for controlling and managing process objects of the DCS. Although add-on systems are available to manage versions in the DCS, these solutions merely synchronise manually selected configuration data packages to an external version management system, without offering any built-in detection or handling of conflicts, support for merging changes, and so forth. Thereby, such solutions lack effective methods for version tracking, auditing, and rollback. Additionally, some existing systems are complex to set up, configure, and use, leading t/o increased costs and reduced user adoption. As a result, operators may not use the version management solution as intended, which can lead to further issues and increased risk to the DCS.

The information disclosed in this background of the disclosure section is only for enhancement of understanding of the general background of the invention and should not be taken as an acknowledgement or any form of suggestion that this information forms the prior art already known to a person skilled in the art.

### SUMMARY

In an embodiment, the present disclosure discloses a method of version management for Distributed Control Systems (DCSs). The method comprises retrieving one or more source files related to one or more objects corresponding to a function of a device of a DCS from a data repository associated with the DCS, based on receiving a request from one or more users associated with the DCS. Further, the method comprises retrieving one or more versions of the one or more source files, from one or more model services corresponding to the one or more source files. Furthermore, the method comprises executing one or more operations for the device of the DCS based on one or more user inputs. The one or more operations are executed based on the one or more source files from the data repository and the one or more versions from the one or more model services. Thereafter, the method comprises managing the one or more versions of the one or more source files based on execution of the one or more operations.

In an embodiment, the present disclosure discloses a version management system for Distributed Control Systems (DCSs). The version management system comprises a processor and a memory. The processor is configured to retrieve one or more source files related to one or more objects corresponding to a function of a device of a DCS from a data repository associated with the DCS, based on receiving a request from one or more users associated with the DCS. Further, the processor is configured to retrieve one or more versions of the one or more source files, from one or more model services corresponding to the one or more source files. Furthermore, the processor is configured to execute one or more operations for the device of the DCS based on one or more user inputs. The one or more operations are executed based on the one or more source files from the data repository and the one or more versions from the one or more model services. Thereafter, the processor is configured to manage the one or more versions of the one or more source files based on execution of the one or more operations.

The foregoing summary is illustrative only and is not intended to be in any way limiting. In addition to the illustrative aspects, embodiments, and features described above, further aspects, embodiments, and features will become apparent by reference to the drawings and the following detailed description.

### BRIEF DESCRIPTION OF THE ACCOMPANYING DRAWINGS

The novel features and characteristics of the disclosure are set forth in the appended claims. The disclosure itself, however, as well as a preferred mode of use, further objectives, and advantages thereof, will best be understood by reference to the following detailed description of an illustrative embodiment when read in conjunction with the accompanying figures. One or more embodiments are now described, by way of example only, with reference to the accompanying figures wherein like reference numerals represent like elements and in which:
**Figure 1** illustrates an exemplary environment for version management in Distributed Control Systems (DCSs), in accordance with some embodiments of the present disclosure;
**Figure 2** illustrates a detailed diagram of a version management system for DCS, in accordance with some embodiments of the present disclosure;
**Figure 3** shows an exemplary flow chart illustrating method steps of version management for Distributed Control Systems (DCSs), in accordance with some embodiments of the present disclosure;
**Figure 4A** shows an exemplary block diagram of an engineering system for a microservice architecture based DCS, in accordance with some embodiments of the present disclosure;
**Figure 4B** shows an exemplary process flow illustrating method steps of version management for difference file distribution in DCS, in accordance with some embodiments of the present disclosure;
**Figure 4C** shows an exemplary process flow illustrating method steps of performing a merge operation for implementing version management in DCS, in accordance with some embodiments of the present disclosure;
**Figure 5** shows an exemplary process flow illustrating method steps of version management for branch-based multi-stage engineering in DCS, in accordance with some embodiments of the present disclosure;
**Figure 6** shows an exemplary visualisation of differences in versions of a source file, in accordance with some embodiments of the present disclosure; and
**Figure 7** illustrates a block diagram of an exemplary computer system for implementing embodiments consistent with the present disclosure, in accordance with some embodiments of the present disclosure.

It should be appreciated by those skilled in the art that any block diagram herein represents conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and executed by a computer or processor, whether or not such computer or processor is explicitly shown.

### DETAILED DESCRIPTION

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

While the disclosure is susceptible to various modifications and alternative forms, specific embodiment thereof has been shown by way of example in the drawings and will be described in detail below. It should be understood, however that it is not intended to limit the disclosure to the particular forms disclosed, but on the contrary, the disclosure is to cover all modifications, equivalents, and alternatives falling within the scope of the disclosure.

The terms "comprises", "comprising", or any other variations thereof, are intended to cover a non-exclusive inclusion, such that a setup, device, or method that comprises a list of components or steps does not include only those components or steps but may include other components or steps not expressly listed or inherent to such setup or device or method. In other words, one or more elements in a system or apparatus proceeded by "comprises... a" does not, without more constraints, preclude the existence of other elements or additional elements in the system or apparatus.

Version management is a critical component in managing a Distributed Control System (DCS). However, version management in DCS is often hindered by several challenges. One significant challenge is the complexity of the control system configurations and files, which can make it difficult to track and manage changes effectively. Additionally, lack of a centralized repository for control system files and configurations can lead to multiple copies of files or configurations, creating confusion and errors. This may also lead to difficulties in identifying a latest version of a file or configuration when multiple versions exist. Existing solutions for version management are time-consuming and resource-intensive, making it challenging to compare different versions of files or configurations, and identify and resolve any issues that may arise. Moreover, with respect to manual solutions for version management, human error is also a potential risk when managing large and complex control systems, which can result in system downtime or even system failures. Thus, there is a need for a robust version management system that addresses these challenges and improves version management in DCS, ensuring efficient control system management, and reducing the risk of downtime and errors.

Accordingly, the present disclosure provides a method and a system for version management in Distributed Control Systems (DCSs). The present disclosure provides efficient version management for a microservice-based DCS having plurality of microservices. Herein, each object of the DCS includes corresponding model services associated with each source file for the object. The corresponding model service stores versions of the source file associated with the object. As a result, complexity of maintaining versions and executing operations in a microservice based DCS is reduced advantageously. The present disclosure provides improved control over the DCS by keeping a track of changes (different versions) made to the one or more source files over time. Moreover, previous versions of files or configurations can be viewed and restored if necessary, enabling better management of the DCS. The present disclosure also enhances collaboration among users of the DCS by providing a central repository for control system files and configurations such that each user can work on their own copy of the files and then merge their changes into the main repository. Moreover, the present disclosure increases efficiency of the users by enabling easy comparison of different versions of files or configurations to identify and fix any issues that may arise, reducing the time and effort required while working with the DCS. The present disclosure also provides better data management for the DCS by offering a detailed history of changes made for the source files, including details of users by whom the changes are performed and timing of the same ; which can be used for troubleshooting, maintenance, and auditing purposes. Finally, the present disclosure aids in compliance with industry regulations and standards by providing a clear audit trail of changes made to the control system. This can be particularly beneficial in industries that are highly regulated, such as pharmaceuticals, chemicals, or energy.

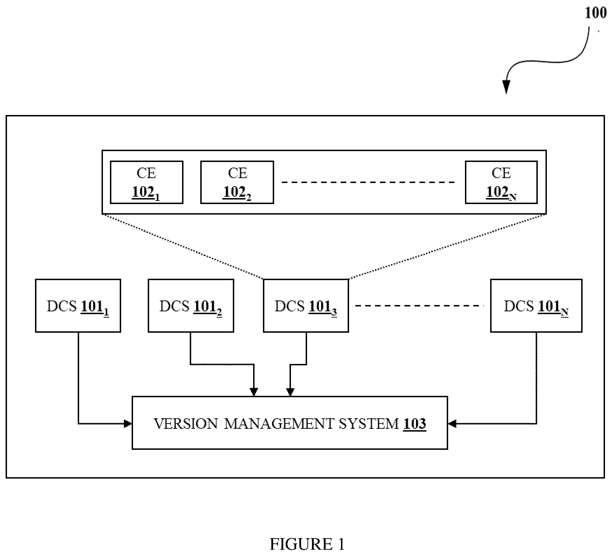

**Figure** 1 illustrates an exemplary environment 100 for version management in Distributed Control Systems (DCSs), in accordance with some embodiments of the present disclosure.

The exemplary environment 100 comprises distributed control systems (DCSs) 101₁, 101₂, 101₃, ........., 101_{N} (hereinafter referred as a distributed control system (DCS) 101) and a version management system 103. The DCS 101 is a control system for a process or plant, wherein the control system may include multiple control loops for executing different functions of the DCS 101. The DCS 101 comprises a plurality of devices (i.e., control elements) 102₁, 102₂, ........., 102_{N} (collectively referred as the devices 102). Such devices 102 may be implemented as at least one of: a computing unit, a sensor, and the like. Herein, when the devices 102 is implemented as the computing unit, the devices 102 may be utilised to compute for operation of the DCS 101. Likewise, when the devices 102 is implemented as the sensor, the devices 102 may be utilised to sense for operation of the DCS 101. For example, the devices102 may be utilised to sense a parameter and collect relevant data associated with the DCS 101.The version management system 103 may provide version management for the DCS 101.

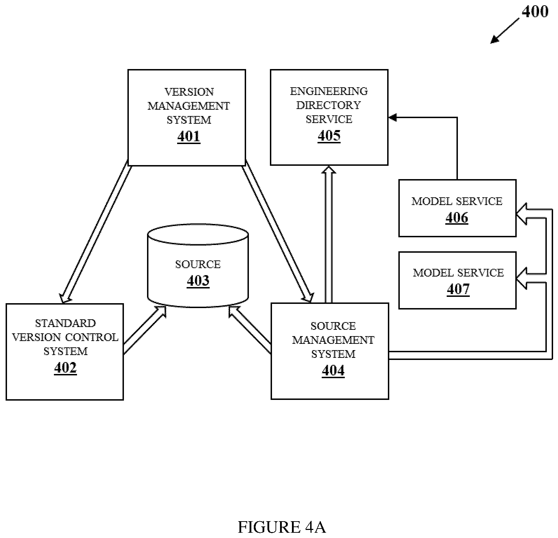

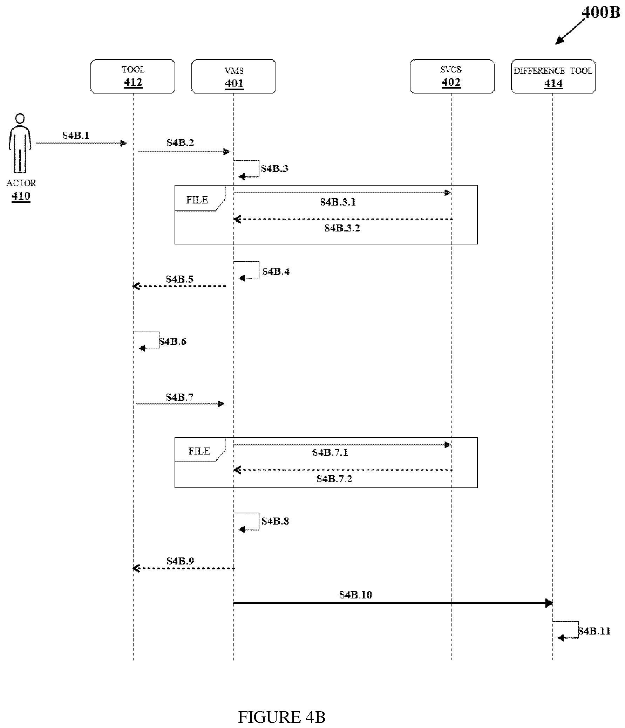

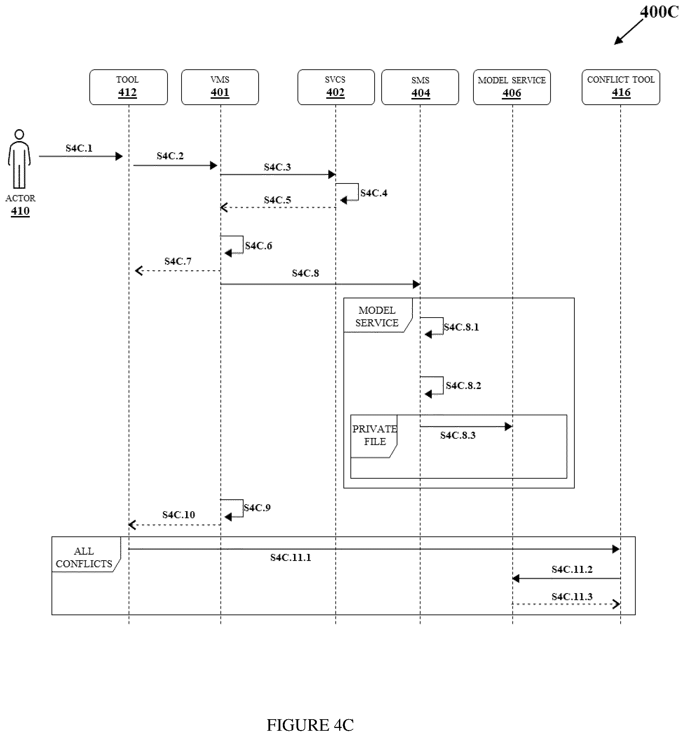

The version management system 103 may include a computing device such as, but not limited to, a laptop computer, a desktop computer, a Personal Computer (PC), a notebook, a smartphone, a tablet, a server, a network server, a cloud-based server, an edge computing device, a processing device, and the like. The version management system 103 may receive one or more source files of the DCS 101. The one or more source files may contain data/instructions pertaining to the control loops for executing different functions corresponding to devices 102 of the DCS 101. In an embodiment, the one or more source files may be stored at a data repository associated with the DCS 101. Herein, in some embodiments, the data repository is implemented as a memory of the version management system 103.However, in other embodiments, the data repository may be implemented as an external memory, such that the data repository is communicably coupled to the version management system 103. Notably, the DCS 101 is implemented as a microservice architecture based DCS. Herein, one or more versions of the one or more source files may be created by the one or more users for controlling the DCS 101. The microservice based architecture of the DCS is described in detail below in Figure 4.

In an embodiment, the one or more source files are created and maintained by multiple (extensible) services and tools of the DCS 101. It will be appreciated that the one or more source files are implemented in textual format. For example, Extensible Markup Language (XML) or JavaScript Object Notation (JSON) formats may be utilised for the one or more source files. Notably, the version management system 103 may initially configure the one or more source files sequentially. Additionally, detailed syntax present in the one or more source files may be formatted to permit the version management system 103 to perform one or more operations for version management.

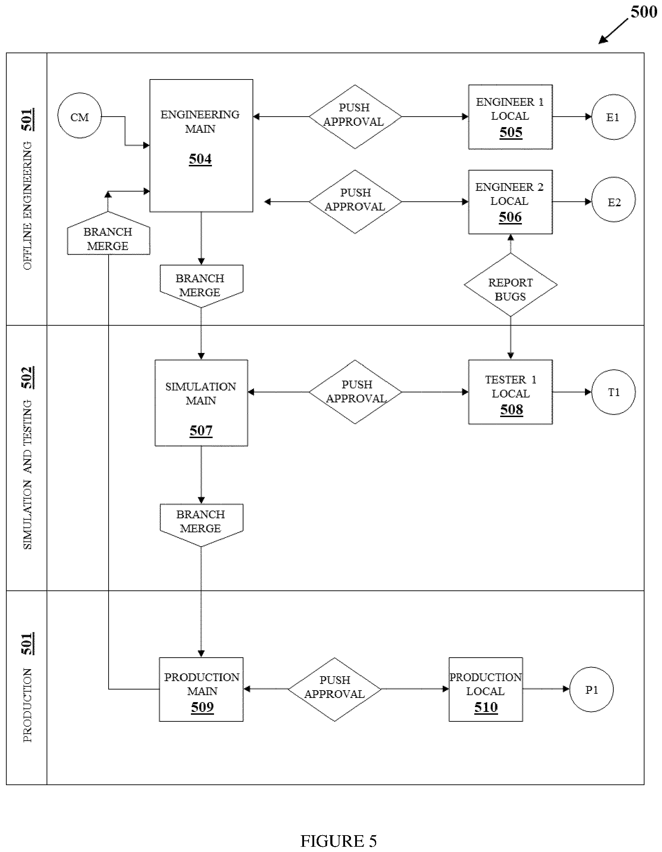

This advantageously reduces the need to lock the one or more source files prior to making changes. For example, even when multiple users make changes to the same source file, in most cases the version management system 103 can automatically perform the merge operation for the same file. However, when there exists conflicts which cannot be solved automatically, they are clearly marked and presented to the user to resolve). Moreover, the version management system 103 may execute the one or more operations using the one or more versions and the one or more source files, as explained in detail in the subsequent figures. The one or more operations are executed stage-wise for each of a plurality of stages in the DCS 101, as explained in detail in figure 5.

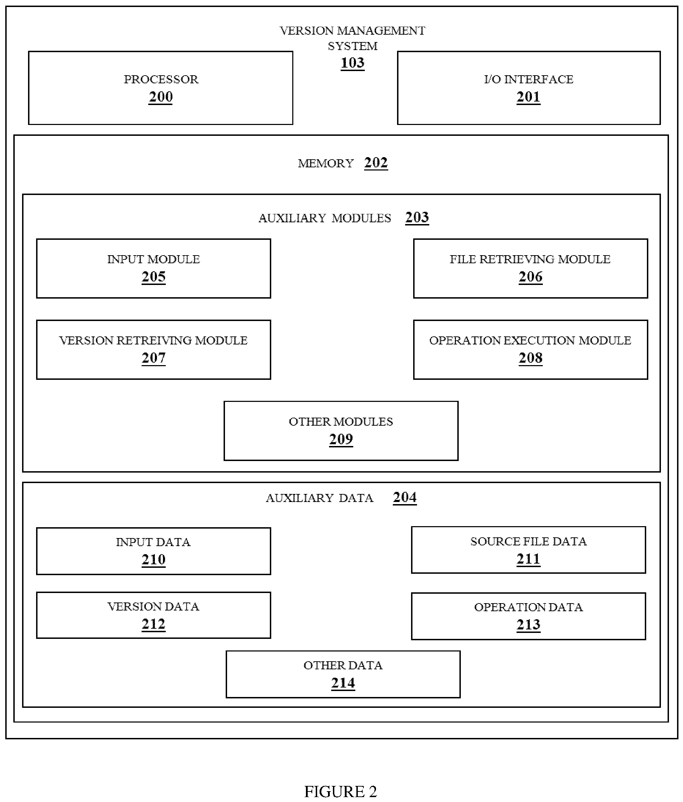

**Figure 2** illustrates a detailed diagram of a version management system for DCS, in accordance with some embodiments of the present disclosure.

The version management system 103 comprises a processor 200, an Input/ Output (I/O) interface 201, and a memory 202. In some embodiments, the memory 202 may be communicatively coupled to the processor 200. The memory 202 stores instructions executable by the processor 200. The processor 200 may comprise at least one data processor for executing program components for executing user or system-generated requests. The memory 202 may be communicatively coupled to the processor 200. The memory 202 stores instructions, executable by the processor 200, which, on execution, may cause the processor 200 to provide version management for DCS 101.

In an embodiment, the memory 202 may include one or more auxiliary modules 203 and auxiliary data 204. The one or more auxiliary modules 203 may be configured to perform the steps of the present disclosure using the auxiliary data 204, to provide version management for DCS 101. In an embodiment, each of the one or more auxiliary modules 203 may be a hardware unit which may be outside the memory 202 and coupled with the version management system 103. As used herein, the term 'modules' refers to an Application Specific Integrated Circuit (ASIC), an electronic circuit, a Field-Programmable Gate Arrays (FPGA), Programmable System-on-Chip (PSoC), a combinational logic circuit, and/or other suitable components that provide described functionality. The one or more auxiliary modules 203 when configured with the described functionality defined in the present disclosure will result in a novel hardware. Further, the I/O interface 201 is coupled with the processor 200 through which an input signal or/and an output signal is communicated. For example, the version management system 103 may communicate with the devices 102 via the I/O interface 201.

In one implementation, the auxiliary modules 203 may include, for example, an input module 205, a file retrieving module 206, a version retrieving module 207, an operation execution module 208, and other modules 209. It will be appreciated that such aforementioned auxiliary modules 203 may be represented as a single module or a combination of different modules. In one implementation, the auxiliary data 204 may include, for example, input data 210, source file data 211, version data 212, operation data 213, and other data 214.

In an embodiment, the input module 205 may be configured to receive input data 210 pertaining to the DCS 101. Herein, the input data 210 may refer to instructions from one or more users of the DCS 101. Such instructions may include, but are not limited to, a request from the one or more users for retrieving the one or more source files pertaining to a function of a device of the DCS 101, one or more user inputs for executing one or more operations, user inputs for resolving conflicts, and the like. Examples of such instructions may be implemented as at least one of: fetching data, copying source files, editing source files, creating source files, deleting source files, requesting roll back, viewing change history, viewing difference between versions, and so forth. Notably, the input data 210 provided by the one or more users may be utilized for a variety of functions as described above. It will be appreciated that different input data 210 from the one or more users may implement different functions at the DCS 101.

In an embodiment, the file retrieving module 206 may be configured to retrieve the one or more source files related to one or more objects corresponding to a function of a device of devices 102 of a DCS 101 from a data repository associated with the DCS 101. Herein, an object may refer to a digital asset or data item that can be managed using the version management system 103. Notably, each object may relate to a real-word entity. For instance, an object can be any digital file or component that makes up the DCS 101, such as control logic, process data, graphics, configuration files, documentation, and so on. Essentially, an object can be any digital entity of a physical component such as, a motor, that can be modified or updated over time and requires version control to manage those changes. Moreover, the one or more objects may be classified using object types. An object type is a reusable user-defined composite class that encapsulates definitions of a set of functions and procedures that are applied to all instances of the class. Examples of functions that the object type include, but are not limited to, control logic, process data, graphics, configuration files, documentation, audit trail, process/batch recipes, calibration data, user accounts.

Notably, the file retrieving module 206 may be configured to retrieve, and thereby store the one or more source files at one or more model services associated with the one or more objects. It will be appreciated that multiple source files may exist for each device (for example, devices 102) of the DCS 101. Moreover, each device of the devices 102 is associated with a plurality of functions, such that multiple source files may exist for each function of the device. A person skilled in the art may understand that each source file may pertain to a function of the devices 102. Data pertaining to the one or more source files may be stored in the memory 202 as source file data 211. The one or more model services may be implemented as temporary storage for the one or more source files, wherein each model service is associated with a source file, and by extension, each model service is also associated with an object of the one or more objects. For example, consider the object in a DCS system to be a motor. The motor may have an associated motor library describing the motor as an object type. Based on which multiple motor instances may be created. Each of the one or more source files herein may relate to the multiple motor instances.

In an embodiment, the version retrieving module 207 retrieves one or more versions of the one or more source files, from a data repository associated with the DCS. Data pertaining to the one or more versions of the one or more source files may be stored in the memory 202 as the version data 212. The data pertaining to the one or more versions (i.e., the version data 212) may include, but not be limited to, version number, version creator name, time, and date of version creation, and so forth. Such data may assist the version retrieving module 207 in retrieving the one or more versions. In an embodiment, the one or more versions may represent development pertaining to a given object, wherein a first version may refer a first set of changes to a source file, and a latest version may pertain to a latest set of changes to the source file, such that intermittent versions represent intermittent changes and/or modifications made to the original source file. It will be appreciated that the version retrieving module 207 may retrieve the one or more versions of the one or more source files based on inputs received from the one or more users. Notably, the one or more users may be associated with the one or more model services.

The one or more versions may be previously generated and stored at the one or more model services. Notably, the one or more users may generate the one or more versions of the one or more source files using the one or more source files. It will be appreciated that the one or more versions are stored at the one or more model services. Herein, the one or more users may generate the one or more versions by providing inputs. Notably, the inputs are provided for: addition of a new source file, editing of an existing source file, deletion of an existing source file.

In an embodiment, the operation execution module 208 executes one or more operations for the device of the DCS 101 based on one or more user inputs. Herein, the one or more operations are executed based on the one or more source files from the data repository and the one or more versions from the one or more model services. Notably, execution of the one or more operations assists in effectively managing the one or more versions of the one or more source files in the DCS 101. Herein, the one or more operations refer to an action taken to manage the one or more versions. Such operations may be referred as: Check-in (adding a new version of an object), Check-out (retrieving a specific version of an object), Merge (combining changes made to different versions of an object), Revert (undoing changes that were made to an object), Branching (creating a new branch of an object to work on new features or experiment with different changes to the object), and the like.

Alternatively, the one or more operations may be referred as: a change history operation, a roll-back/revert operation, a difference presentation operation, a concurrent multi-user operation, a merge operation, and a conflict resolution operation. Notably, the operation execution module 208 executes the one or more operations listed above and explained hereinbelow.

The operation execution module 208 executes the change history operation by changing at least one portion in a historical version of the one or more versions. Herein, the historical version refers to a previously created version of the one or more source files. For example, a user can view a previous version of a source file and make modifications to that version without affecting the current version. In an embodiment, the operation execution module 208 may execute the change history operation by supporting tracking of changes, such that all changesets for the one or more users are visualised. Each changed file in a change-set may also be presented showing the changes. Moreover, the operation execution module 208 may present all changes of a file, change history for an object type or a library, and so forth.

The roll-back/revert operation allows users to return to a previous version of the source files. This can be performed by resetting to a previous version of the source file or by restoring selected changes from a previous version. Optionally, the roll-back/revert operation comprises rolling back to a previous version of the one or more source files maintained at the one or more model services. Herein, rolling back is performed by at least one of: resetting to a previous version of the one or more source files, and restoring one or more changes selected by the user from a previous version of the one or more source files. Herein, the operation execution module 208 performs the roll-back/revert operation. The term 'roll-back' or 'revert' refers to reverting to a previous version of the one or more source files maintained at the one or more model services. The roll-back can be performed by resetting the one or more source files to a previous version, or by restoring one or more selected changes from a previous version of the one or more source files. Resetting involves discarding all changes made after the previous version and restoring the previous version as the current version. Restoring selected changes involves identifying the specific changes made in a previous version and selectively applying those changes to the current version, while discarding any other changes made in between. The rollback operation provides a means of undoing changes that have been made to a source file, either due to errors or changes in requirements, and can help maintain integrity of the source file, over time. Notably, reverting selected changes may cause inconsistency in the DCS 101, since changes outside selected ones are not automatically handled. Typically, reverted objects may include references to other objects that have undergone changes in the meantime, e.g., they may have been renamed, deleted, or moved.

The difference presentation operation comprises presenting differences between two or more versions. The difference presentation operation allows users to compare and contrast different versions of the source files. This can be useful when identifying changes made by other users or when debugging codes of the one or more source files. For inspecting differences between historical versions of the one or more source files (or elements thereof, such as objects, types, and models), the operation execution module 208 may create a matching set of temporary files with content from a selected point in time from the one or more source files. Then, differences per source file pair 'before/after' are presented. The file pairs may be transferred to tools which can interpret relevant file content. These tools may correspond with the version management system 103. For example, public files are handled by the engineering workplace, which contains specific user views for presenting differences in the model service, and private files must be passed to the relevant model service to display the differences in their specific presentation views. Herein, the public files pertain to the one or more source files which may be accessed by any and all users associated with the DCS 101, whereas the private files pertain to the one or more source files which may only be accessed by specific users associated with the DCS 101.

The concurrent multi-user operation comprises providing the one or more versions simultaneously to the one or more users. Herein, the one or more users may simultaneously work on the one or more versions simultaneously. This can increase productivity and allow for collaboration between team members.

The merge operation involves identifying and integrating differences between different versions of the source files. This can be used to combine changes made by different users or to reconcile differences between branches of the source files. The merge operation comprises determining a first set of one or more differences amongst each of the one or more versions of the one or more source files and determining a second set of one or more differences between each of the one or more versions and the one or more source files simultaneously. Thereafter, the merge operation comprises integrating the one or more versions in the one or more source files, based on the first and second set of one or more differences. Herein, the operation execution module 208 performs the merge operation. The merge operation refers to an operation wherein two or more versions are merged within the one or more source files. It will be appreciated that the operation execution module 208 utilizes a three-way merge technique for performing the merge operation. Three-way merge is a technique used in version control systems to merge changes made to the source file by different users, by comparing the source file with modified versions and creating a new merged version.

In an example, consider a software development team working on a new project and creates several versions of the one or more source files over time. When the team is ready to integrate the changes made to each version and create a single, unified version of the project, the merge operation is performed. During the merge operation, the operation execution module 208 analyses differences between different versions of the one or more source files and reconciles those differences. The operation execution module 208 then integrates those differences into a new version of the project, which represents a combination of the changes made to each of the previous versions.

Finally, the conflict resolution operation involves detecting and resolving conflicts between different versions of the source files. This can include modifying versions of the source files based on user input to resolve conflicts. The conflict resolution operation comprises determining one or more conflicts amongst each of the one or more versions of the one or more source files and between each of the one or more versions and the one or more source files. Thereafter, the conflict resolution operation comprises resolving the one or more conflicts by modifying the one or more versions of the one or more source files, based on user inputs. Herein, the operation execution module 208 performs the conflict resolution operation. The term 'conflict resolution' refers to resolving conflicts that arise when different versions of the same source file have been modified by different users or teams, or when a version of a source file is incompatible with a current version of the file. In some embodiments, conflict may arise due to inputs by different users. In other embodiments, conflict may arise due to different inputs by same user.

Notably, the one or more versions are modified to resolve the one or more conflicts. When performing the conflict resolution operation, the operation execution module 208 involves identifying conflicts amongst each of the one or more versions of the one or more source files and between each of the one or more versions and the one or more source files. These conflicts may include changes carried out to the same line of datalinstructions in the one or more source files or changes that conflict with the overall structure of the one or more source files. Once the conflicts have been identified, the operation execution module 208 allows the one or more users to modify the one or more versions of the one or more source files based on their inputs, in order to resolve the conflicts. This may involve merging changes from different versions, selectively applying changes, or modifying the overall structure of the one or more source files. The present invention provides effective conflict resolution, which is critical to maintaining the integrity and functionality of the one or more source files and helps to ensure that different teams or individuals can work on the same source file without causing conflicts or introducing errors.

It will be appreciated that the operation execution module 208 manages the one or more versions of the one or more source files based on execution of the one or more operations.

The other data 214 may store data, including temporary data and temporary files, generated by the one or more auxiliary modules 203 for performing the various functions of the version management system 103. The one or more auxiliary modules 203 may also include the other modules 209 to perform various miscellaneous functionalities of the version management system 103. The other data 214 may be stored in the memory 202. It will be appreciated that the one or more auxiliary modules 203 may be represented as a single module or a combination of different modules.

In an embodiment, the other modules 209 may include a display module, a difference identification module, and a branching module. The display module may display at least one of: the one or more versions of the one or more source files and differences between the one or more versions of the one or more source files, in one of: a graphical representation, a non-graphical representation. The difference identification module may identify differences between the one or more versions of the one or more source files. The branching module may distribute the DCS 101 into one or more branches representing different aspects of the DCS 101. For example, the branches may include main engineering, production, simulation, and so forth.

Herein, the other data 214 may store data pertaining to display data associated with the display module. For example, the other data 214 may include the graphical representation, the non-graphical representation. In an embodiment, the non-graphical representation may be implemented as a textual representation. Notably, differences in graphical programs are computed by comparing underlying (XML) representation, and then visualizing using a specialized graphical difference viewer which colour-codes the changes made across versions.

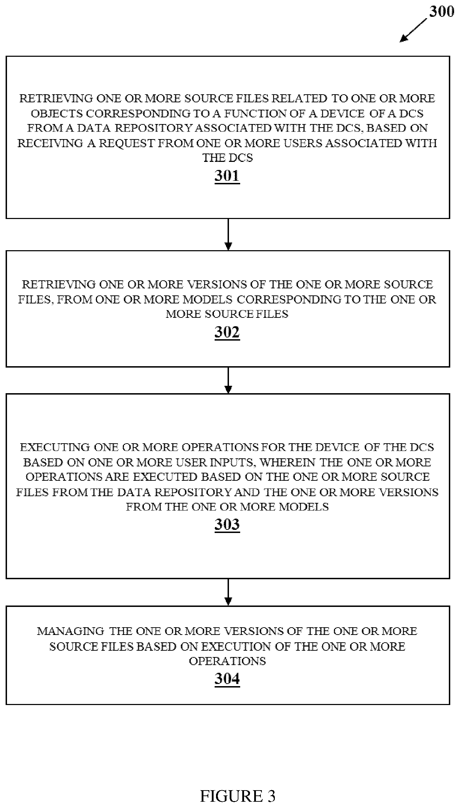

**Figure 3** shows an exemplary flow chart illustrating method steps of version management for Distributed Control Systems (DCSs), in accordance with some embodiments of the present disclosure.

As illustrated in Figure 3, the method 300 may comprise one or more steps. The method 300 may be described in the general context of computer executable instructions. Generally, computer executable instructions can include routines, programs, objects, components, data structures, procedures, modules, and functions, which perform particular functions or implement particular abstract data types.

The order in which the method 300 is described is not intended to be construed as a limitation, and any number of the described method blocks can be combined in any order to implement the method. Additionally, individual blocks may be deleted from the methods without departing from the scope of the subject matter described herein. Furthermore, the method can be implemented in any suitable hardware, software, firmware, or combination thereof.

At step 301, the version management system 103 may retrieve one or more source files related to one or more objects corresponding to a function of a device of a DCS 101 from a data repository associated with the DCS 101, based on receiving a request from one or more users associated with the DCS 101. Herein, the one or more source files refer to source files currently implemented in the DCS 101. It will be appreciated that the one or more source files are stored at the data repository associated with the DCS. In an embodiment, the data repository is implemented as a memory of the DCS 101. Moreover, the DCS 101 comprises a plurality of devices, each performing a plurality of functions, and each of the one or more source files relates to each object of the function of the device. It will be appreciated that the method 300 is triggered by the request from the one or more users. Herein, in an exemplary embodiment, the data repository may be associated with a DCS Engineering System. Additionally, the user associated with the DCS may be at least one of: an automation engineer, a production engineer, a testing engineer, an analyst, and so forth.

At step 302, the version management system 103 may retrieve one or more versions of the one or more source files, from one or more model services corresponding to the one or more source files. It will be appreciated that each model service corresponds to an object and stores source files corresponding to the object. Moreover, all unsaved versions of a given source file are stored at the respective model service. When saved, the one or more versions are stored at the data repository associated with the DCS. Notably, the one or more versions are previously generated by the one or more users based on the one or more source files. Thereby, the version management system 103 may retrieve the one or more versions from the data repository.

At step 303, the version management system 103 may execute one or more operations for the device of the DCS 101 based on one or more user inputs. It will be appreciated that the one or more operations to be executed are decided by the one or more user inputs. The one or more operations comprise at least one of: a change history operation, a roll-back/revert operation, a difference presentation operation, a concurrent multi-user operation, a merge operation, and a conflict resolution operation. Herein, the one or more operations are executed based on the one or more source files from the data repository and the one or more versions from the one or more model services. On execution of the one or more operations, respective source files and/or versions are utilized, based on the operation. For example, when executing a merge operation, two concurrent versions and the source file are merged together using the three-way merge technique.

At step 304, the version management system 103 may manage the one or more versions of the one or more source files based on execution of the one or more operations. It will be appreciated that version management is achieved by performing the one or more operations on the one or more source files and the one or more versions. Such operation execution may result in new versions of the one or more source files. Accurate storage, operation execution and file management of the one or more versions assists in providing version management for the DCS 101.

**Figure 4A** shows an exemplary block diagram of an engineering system 400 for a microservice architecture based DCS, in accordance with some embodiments of the present disclosure.

It will be appreciated that in the microservice architecture based DCS 101, all configuration data is stored in source data files, and organized into projects (i.e., functions). Herein, a project contains a complete set of configuration data for the project, organized such that individual files exist for each object and model. Each project/function is divided into the one or more objects. The model herein relates to a DCS function corresponding to a given object.

The engineering system 400 refers to a system corresponding to a microservice architecture based DCS, which allows the one or more users to provide inputs for modifying the DCS. The term `engineering system' refers to a system having an integrated set of tools, processes, and methodologies used to design, configure, deploy, and maintain the DCS within an industrial control environment. As shown in the figure, the engineering system 400 comprises a version management system (VMS) 401, a standard version control system (SVCS) 402, a source 403, a source management system (SMS) 404, an engineering directory service (EDS) 405, and a plurality of model services (the model services being implemented herein as two model services: model service 406, and model service 407). Notably, the VMS 401 and the SMS 404 are dedicated sub-systems of the engineering system 400 for managing configuration data in the one or more source files. Herein, each object of the DCS includes corresponding model services associated with each source file for the objects and models. Herein, model service refers to a software-based service responsible for the engineering and configuration of DCS functions. Each model service stores configuration data in source files, typically for one source file per model. Moreover, the model corresponds to a DCS function related to a specific object.

The VMS 401 is responsible for version management of the one or more source files based on the SVCS 402. The VMS 401 is used for storing and retrieving the changes made to the one or more source files (i.e., versions of the one or more source files). Moreover, the VMS 401 coordinates updates between the SVCS 402 and the one or more sources files for performing the one or more operations. The VMS 401 integrates and controls the SVCS 402. Herein, the VMS 401 hides details of the SVCS 402 and provides a software-based interface adapted to the DCS 101, with services suited for DCS engineering having multi-user workflows. In an example, fine-granular change history per file may be aggregated into showing history per process object. In another example, rollback of changes may be performed on at least one of: an entire project, on a single object, or a selected set of objects. The SVCS 402 is a tool that records, and stores changes made to the one or more source files by keeping track of modifications made therein. Moreover, the SVCS 402 provides all saved modifications (i.e., versions approved by a user) of the one or more source files to the source 403. In an exemplary implementation, the SVCS 402 may be implemented as Git.

The source 403 is a data repository which stores all configuration data pertaining to the one or more source files. Notably, data stored at the source 403 is public data (i.e., source file being implemented at DCS 101). The SMS 404 is responsible for managing the source 403 within the engineering system 400. Herein, the SMS 404 consolidates the one or more source files for an entire DCS projects, while collaborating with the VMS 401 to provide version handling. The SMS 404 coordinates the one or more source files for a given DCS project, ensuring data consistency across the EDS 405 and the plurality of model services 406, 407. In an embodiment, an ordinary file storage (folder) may be used for source persistence. A current version of a given source file are stored at a given model service (i.e., model service). For example, all versions pertaining to the source file associated with the model service 407 are maintained at the model service 407 unless they are saved. Once a given version is saved, it is stored at the SVCS 402. Notably, the unsaved versions of the given source file are private to the given model service. When an older version is required to perform an operation, the SMS 404 utilises the VMS 401 and the SVCS 402 to provide the same to the given model service. The SMS 404 provides access to the one or more source files to the EDS 405.

The EDS 405 maintains definitions and dependencies between the plurality of model services. Herein, each of the plurality of model services (for example, the model service 406 and/or the model service 407) provides updates to the EDS 405 when changes in the one or more source files may affect a public version of the one or more source files. In an embodiment, the plurality of model services (for example 406, 407) may update the EDS 405 via a coordination interface. In another embodiment, the EDS 405 may check consistency when updating data provided by the plurality of model services 406, 407.

In an embodiment, the current unsaved versions of the one or more source files may be stored at the one or more model services 406, 407. Moreover, the previous versions of the one or more source files are stored at the SVCS 402. This means that in case a user wishes to revert to a previous version of the one or more source files, the user may be able to execute said change momentarily instead of editing the one or more source files again. In such cases, the reverting operation is performed by the VMS 401 using the SVCS 402. A new version of the reverted file is created and provided to the one or more model services 406, 407 for immediate visibility and use.

In an embodiment, the one or more source files may be rolled back to a previous version of the one or more source files maintained at the one or more model services. Rolling back is performed for at least one of: resetting to the previous version of the one or more source files; and restoring one or more changes from the previous version of the one or more source files. Herein, in the former, the entire previous version is completely restored at the one or more source files, whereas, in the latter, only certain changes from the previous version are restored at the one or more source files.

**Figure 4B** shows an exemplary process flow illustrating method steps of version management for difference file distribution in DCS 101, in accordance with some embodiments of the present disclosure.

As illustrated in Figure 4B, the method 400B may comprise one or more steps. The method 400B may be described in the general context of computer executable instructions. Generally, computer executable instructions can include routines, programs, objects, components, data structures, procedures, modules, and functions, which perform particular functions or implement particular abstract data types.

The order in which the method 400B is described is not intended to be construed as a limitation, and any number of the described method blocks can be combined in any order to implement the method. Additionally, individual blocks may be deleted from the methods without departing from the scope of the subject matter described herein. Furthermore, the method can be implemented in any suitable hardware, software, firmware, or combination thereof.

As shown in Figure 4B, the method 400B utilises the version management service (VMS) 401, the standard version control service (SVCS) 402, a tool 412 and a model difference tool 414. Notably, the method 400B is initiated when an actor 410 provides an input at step S4B.1 for listing versions to the tool 412. At step S4B.2, the tool 412 relays the input of the actor 410 to list versions to the VMS 401. At step S4B.3, the VMS 401computes a file set. Herein, for each file, at step S4B.3.1, the VMS 401fetches a file history from the SVCS 402, and at step S4B.3.2, the SVCS 402returns the file history to the VMS 401. At step S4B.4, the VMS 401 consolidates commit history. At step S4B.5, the VMS 401returns the consolidated history to the tool 412. At the tool 412, the actor 410may, at step S4B.6, select versions from the consolidated history for difference; and at step S4B.7, the selected versions are provided to the VMS 401. Herein, for each file, at step S4B.7.1, the VMS 401fetches the file from the SVCS 402, and at step S4B.7.2, the SVCS 402returns the file to the VMS 401. At step S4B.8, the VMS 401presents differences in publicly available files. At step S4B.9, the VMS 401returns the differences in publicly available files to the tool 412. At step S4B.10, the VMS 401sends a difference in private file to the model difference tool 414. Finally, at step S4B.11, the model difference tool 414 presents the private difference file.

**Figure 4C** shows an exemplary process flow illustrating method steps of performing a merge operation for implementing version management in DCS 101, in accordance with some embodiments of the present disclosure.

As illustrated in Figure 4C, the method 400C may comprise one or more steps. The method 400C may be described in the general context of computer executable instructions. Generally, computer executable instructions can include routines, programs, objects, components, data structures, procedures, modules, and functions, which perform particular functions or implement particular abstract data types.

The order in which the method 400C is described is not intended to be construed as a limitation, and any number of the described method blocks can be combined in any order to implement the method. Additionally, individual blocks may be deleted from the methods without departing from the scope of the subject matter described herein. Furthermore, the method can be implemented in any suitable hardware, software, firmware, or combination thereof.

As shown in Figure 4C, the method 400C utilises a tool 412, a version management service (VMS) 401, a standard version control service (SVCS) 402, a source management service (SMS) 404, a model service 406, and a model conflict tool 416. Notably, the method 400C is initiated when an actor 410 provides an input at step S4C.1 for pulling changes to the tool 412. At step S4C.2, the tool 412relays the input of the actor 410for pulling changes to the VMS 401. At step S4C.3, the VMS 401relays the input for pulling changes to the SVCS 402. At step S4C.4, the SVCS 402 automatically merges changes in the source file and determines conflict. At step S4C.5, the SVCS 402 returns the source file having merged changes to the VMS 401. At step S4C.6, the VMS 401presents differences of publicly available files in the source file. At step S4C.7, the VMS 401returns the public differences in the source file to the tool 412, such that the actor 410may manually resolve the same. At step S4C.8, the VMS 401reopens a project at the SMS 404. Herein, for each file, at step S4C.8.1, the SMS 4041oads public source files, at step S4C.8.2, the SMS 404identifies the modified private files; and for each private file, at step S4C.8.3, the SMS 404posts the private file to the model service 406. At step S4C.9, the VMS 401presents private differences of private files in the source file. At step S4C.10, the VMS 401returns the differences of private files in the source file to the tool 412. For all conflicts, at step S4C.11.1, the tool 412views detailed difference using the model conflict tool 416, wherein the actor 410may manually resolve the conflict. At step S4C.11.2, the model conflict tool 416provides a resolved private file to the model service 406, and at step S4C.11.3, the model service 406returns the resolved private file to the model conflict tool 416.

**Figure 5** shows an exemplary process flow illustrating method steps of version management for branch-based multi-stage engineering in DCS, in accordance with some embodiments of the present disclosure.

As illustrated in Figure 5, the method 500 may comprise one or more steps. The method 500 may be described in the general context of computer executable instructions. Generally, computer executable instructions can include routines, programs, objects, components, data structures, procedures, modules, and functions, which perform particular functions or implement particular abstract data types.

The order in which the method 500 is described is not intended to be construed as a limitation, and any number of the described method blocks can be combined in any order to implement the method. Additionally, individual blocks may be deleted from the methods without departing from the scope of the subject matter described herein. Furthermore, the method can be implemented in any suitable hardware, software, firmware, or combination thereof.

The one or more operations are executed stage-wise for each of a plurality of stages in the DCS 101. Herein, the term `stage-wise' refers to executing the one or more operations at different stages in the DCS 101, such as during different phases of the software development life cycle or in different branches of the version control system. This allows for more granular control and management of the versions of the source files in the DCS 101, potentially increasing efficiency and reducing errors or conflicts. Notably, branching is a commonly used technique in version management, which involves creating separate branches of the source files to allow for independent development and testing of different features or fixes. The use of branching in conjunction with the stage-wise execution of version management operations allows for greater flexibility and control over the development and management of software in a DCS 101.

It will be appreciated that branches are utilized to facilitate concurrent engineering by multiple teams of engineers. Each engineering project is allocated to a repository in the version management system 103, and multiple branches can be created in the repository. For example, a 'development' branch can be created to design an extension to a project that is already in production. A team of engineers may collaborate to develop the extension in the dedicated branch. When completed, the version in the development branch can be pulled and merged into the production (or 'main') branch without overwriting any changes that have been made in the meantime. When tested and reviewed, the merged version is synchronized to a shared repository prior to being deployed to the DCS 101.

Herein, steps followed by the version management system 103 for providing version management for branch-based multi-stage engineering in DCS 101 are shown. Multiple stages of the DCS 101 work simultaneously to ensure a smooth working environment for the one or more users associated with the DCS 101. In an embodiment, the version management system 103 provides version management based on branch division in the DCS 101. Branches of the version management system 103 are used to keep track of life cycle changes in different stages of engineering at the DCS 101.

Herein, Figure 5 shows an exemplary depiction of branching. As shown in Figure 5, branches of offline engineering 501, simulation and testing 502, and production 503 are created. In each of these branches, engineers work simultaneously to accurately utilise time and energy. In view of the same, each engineer may clone an engineering main 504 locally on their machines prior to initiating work. The engineering main 504 comprises the one or more source files associated with the DCS 101. An engineer may either create a new process engineering project or open an already engineered project. Herein, engineer E1's data is stored at Engineer 1 local 505 and engineer E2's data is stored at Engineer 2 local 506. Similarly, a simulation main 507 under the simulation and testing branch 502 comprises the one or more source files pertaining to simulation and testing, wherein a tester T1's data is stored at Tester 1 local 508. Moreover, a production main 509 under the production branch 503 comprises the one or more source files pertaining to production, wherein a producer P1's data is stored at production local 510.

Each engineer (including testers) works on the one or more source files. Herein, the engineers may be considered as the one or more users providing the one or more inputs. Since the one or more inputs are provided for modifying the one or more source files, the engineers may modify the one or more source files by at least one of: creating of a new source file, editing the one or more source files, deletion of a source file from the one or more source files. When the modifications are made, respective engineer can save their projects, which results in committing the modifications to a local repository. Herein, data stored at the engineering main 504, the simulation main 507 and the production main 509 is merged and saved at the engineering main 504. During merging, the one or more conflicts are determined and appropriately resolved. Each modification is stored as a version of the one or more source files. In an embodiment, the engineer may provide user defined comments along with the modifications. Moreover, bugs (inconsistencies or issues observed in the one or more source files) observed by the tester T1 may be reported to engineers E1 and E2 for resolution.

Notably, since several process engineers may work on the DCS 101 simultaneously, the version management system 103 is beneficially utilised for tracking changes by different engineers that aids in streamlining offline engineering. In an embodiment, the method described in conjunction with Figure 5 may be achieved at a platform layer of the version management system 103.

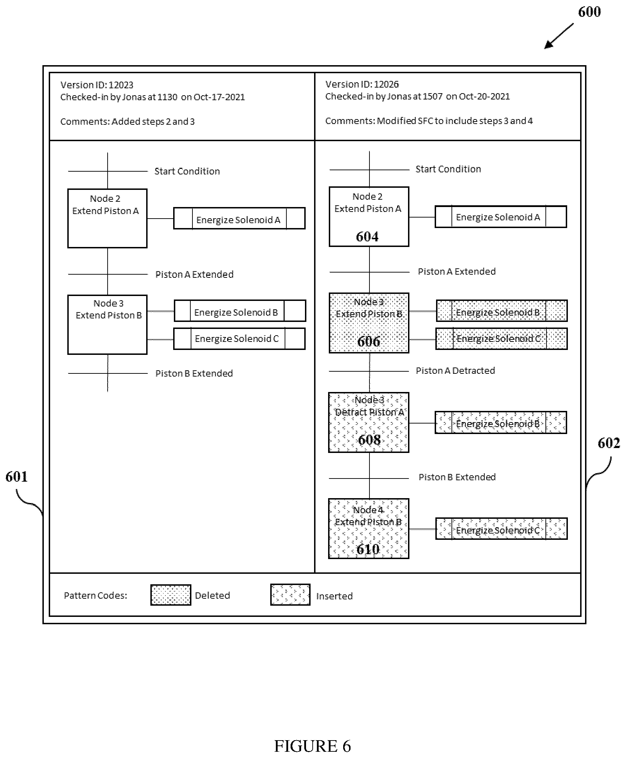

**Figure 6** shows an exemplary visualisation of differences in versions of a source file, in accordance with some embodiments of the present disclosure. Notably, such visualisation of differences is merely a literal comparison of text contained in the one or more source files, and does not consider semantics of programs. In order to show the differences between the programs themselves (or more precisely, components within the programs), contents of a difference file are mapped back to the program components. Each change reported in the difference file relates to a specific component in the program (either old, or new, or edited). Such difference file may be visualised having a graphical view of the components, highlighting changes made to the components, if any. In an embodiment, different colours may be utilised to represent the changes. In an embodiment, the exemplary visualisation of differences in versions of a source file shown in the Figure 6 is implemented by the model difference tool 414 as shown in Figure 4B.

In an embodiment, the DCS 101 may be implemented in a microservice based architecture. As shown in Figure 6, two versions of the source file are depicted: a first version 601 dated 17^{th} October 2021 and a second version 602 dated 20^{th} October 2021. Based on the date and time stamps on the versions, it is apparent that the second version 602 is a modification of the first version 601. Both versions 601, 602 comprise at least one node having commands provided by a user for controlling the DCS. In order to visualise changes carried out to the one or more source files from the first version 601 to the second version 602, the first version 601 and the second version 602 are compared to identify differences. Herein, unedited nodes 604, deleted nodes 606, inserted nodes 608, 610 and edited nodes are shown using different patterns. An addition is made when a node (element, text, or attribute) is present in the new document, but not in the old. A deletion is made when a node is present in the old document, but not in the new. A modification is when the node is present in both versions, but the value of the node is different in the two. As seen in the figure, at node 3, 606 from the first version 601 is deleted to add modified nodes 608 and 610 in the second version 602.

It will be appreciated that all differences reported in the difference file may not correspond to a difference between the one or more source files. In another embodiment, execution of blocks is determined by data flow order for the blocks, which in turn is determined by an order in which they appear in a diagram. Process of execution order may flow from top to down (i.e., node 604, then node 608 and finally node 610), and from left to right. Such processing nodes representing user commands are comprised in each block. A block's layout, thus, decides its order of execution. If the layout is changed, it could result in changing the order in which the block is executed (the data flow order in case of a function bock), which in turn could affect the logic implemented therein. However, if a change in the layout does not affect the execution order of the block, it does not impact the logic of the program, and may be ignored. Additionally, a change in execution order due to addition and deletion of other blocks may be ignored since these are meant to implicitly change the execution order in any case. Minor modifications add unnecessary noise to the displayed results, without providing any useful insights, and thus, may be ignored.

### COMPUTER SYSTEM

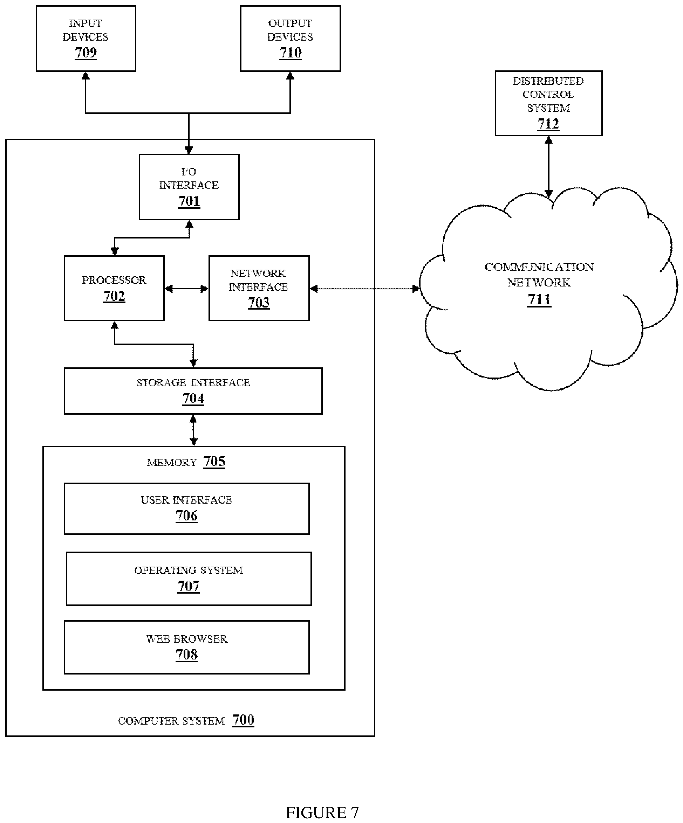

**Figure 7** illustrates a block diagram of an exemplary computer system 700 for implementing embodiments consistent with the present disclosure, in accordance with some embodiments of the present disclosure.

In an embodiment, the computer system 700 may be used for providing version management for the version management system 103. In an exemplary embodiment, the computer system 700 may be implemented as the version management system 103, via which the one or more users may interact with the DCS 101. Herein, the version management system 103 is implemented as a stand-alone system, which is communicably coupled to the engineering system 400. In such embodiment, the computer system 700 may receive the one or more source files from the distributed control system 101 via the communication network 711. Herein, the computer system 700 may be implemented in a cloud computing platform. In another embodiment, the computer system 700 may be implemented in the version management system 103. The computer system 700 may comprise a Central Processing Unit 702 (also referred as "CPU" or "processor"). The processor 702 may comprise at least one data processor. The processor 702 may include specialized processing units such as integrated system (bus) controllers, memory management control units, floating point units, graphics processing units, digital signal processing units, etc.

The processor 702 may be disposed in communication with one or more input/output (I/O) devices 709, 710 via I/O interface 701. The I/O interface 701 may employ communication protocols/methods such as, without limitation, audio, analog, digital, monoaural, RCA, stereo, IEEE (Institute of Electrical and Electronics Engineers) -1394, serial bus, universal serial bus (USB), infrared, PS/2, BNC, coaxial, component, composite, digital visual interface (DVI), high-definition multimedia interface (HDMI), Radio Frequency (RF) antennas, S-Video, VGA, IEEE 802.n /b/g/n/x, Bluetooth, cellular (e.g., code-division multiple access (CDMA), highspeed packet access (HSPA+), global system for mobile communications (GSM), long-term evolution (LTE), WiMax, or the like), etc.

Using the I/O interface 701, the computer system 700 may communicate with one or more I/O devices 709, 710. For example, the input device 709 may be an antenna, keyboard, mouse, joystick, (infrared) remote control, camera, card reader, fax machine, dongle, biometric reader, microphone, touch screen, touchpad, trackball, stylus, scanner, storage device, transceiver, video device/source, sensors, etc. The output device 710 may be a printer, fax machine, video display (e.g., cathode ray tube (CRT), liquid crystal display (LCD), light-emitting diode (LED), plasma, Plasma display panel (PDP), Organic light-emitting diode display (OLED) or the like), audio speaker, etc.

The processor 702 may be disposed in communication with the communication network 709 via a network interface 703. The network interface 703 may communicate with the communication network 711. The network interface 703 may employ connection protocols including, without limitation, direct connect, Ethernet (e.g., twisted pair 10/100/1000 Base T), transmission control protocol/internet protocol (TCP/IP), token ring, IEEE 802.11a/b/g/n/x, etc. The communication network 711 may include, without limitation, a direct interconnection, local area network (LAN), wide area network (WAN), wireless network (e.g., using Wireless Application Protocol), the Internet, etc. The network interface 703 may employ connection protocols including, but not limited to, direct connect, Ethernet (e.g., twisted pair 10/100/1000 Base T), transmission control protocol/internet protocol (TCP/IP), token ring, IEEE 802.11a/b/g/n/x, Bluetooth mesh, Zigbee, etc.

The communication network 711 includes, but is not limited to, a direct interconnection, an e-commerce network, a peer to peer (P2P) network, local area network (LAN), wide area network (WAN), wireless network (e.g., using Wireless Application Protocol), the Internet, Wi-Fi, and such. The first network and the second network may either be a dedicated network or a shared network, which represents an association of the different types of networks that use a variety of protocols, for example, Hypertext Transfer Protocol (HTTP), Transmission Control Protocol/Internet Protocol (TCP/IP), Wireless Application Protocol (WAP), etc., to communicate with each other. Further, the first network and the second network may include a variety of network devices, including routers, bridges, servers, computing devices, storage devices, etc.

In some embodiments, the processor 702 may be disposed in communication with a memory 705 (e.g., RAM, ROM, etc. not shown in Figure 7) via a storage interface 704. The storage interface 704 may connect to memory 705 including, without limitation, memory drives, removable disc drives, etc., employing connection protocols such as serial advanced technology attachment (SATA), Integrated Drive Electronics (IDE), IEEE-1394, Universal Serial Bus (USB), fiber channel, Small Computer Systems Interface (SCSI), etc. The memory drives may further include a drum, magnetic disc drive, magneto-optical drive, optical drive, Redundant Array of Independent Discs (RAID), solid-state memory devices, solid-state drives, etc.

The memory 705 may store a collection of program or database components, including, without limitation, user interface 706, an operating system 707, web browser 708 etc. In some embodiments, computer system 700 may store user/application data, such as, the data, variables, records, etc., as described in this disclosure. Such databases may be implemented as fault-tolerant, relational, scalable, secure databases such as Oracle ^{®} or Sybase^{®}.

The operating system 707 may facilitate resource management and operation of the computer system 700. Examples of operating systems include, without limitation, APPLE MACINTOSH^{R} OS X, UNIX^{R}, UNIX-like system distributions (E.G., BERKELEY SOFTWARE DISTRIBUTION^{™} (BSD), FREEBSD^{™}, NETBSD^{™}, OPENBSD^{™}, etc.), LINUX DISTRIBUTIONS^{™} (E.G., RED HAT^{™}, UBUNTU^{™}, KUBUNTU^{™}, etc.), IBM^{™} OS/2, MICROSOFT^{™} WINDOWS^{™} (XP^{™}, VISTA^{™}/7/8, 10 etc.), APPLE^{R} IOS^{™}, GOOGLE^{R} ANDROID^{™}, BLACKBERRY^{R} OS, or the like.

In some embodiments, the computer system 700 may implement the web browser 708 stored program component. The web browser 708 may be a hypertext viewing application, for example MICROSOFT^{R} INTERNET EXPLORER^{™}, GOOGLE^{R} CHROME^{™0}, MOZILLA^{R} FIREFOX^{™}, APPLE^{R} SAFARI^{™}, etc. Secure web browsing may be provided using Secure Hypertext Transport Protocol (HTTPS), Secure Sockets Layer (SSL), Transport Layer Security (TLS), etc. Web browsers 708 may utilize facilities such as AJAX^{™}, DHTML^{™}, ADOBE^{R} FLASH^{™}, JAVASCRIPT^{™}, JAVA^{™}, Application Programming Interfaces (APIs), etc. In some embodiments, the computer system 700 may implement a mail server (not shown in Figure) stored program component. The mail server may be an Internet mail server such as Microsoft Exchange, or the like. The mail server may utilize facilities such as ASP^{™}, ACTIVEX^{™}, ANSI^{™} C++/C#, MICROSOFT^{R}, .NET^{™}, CGI SCRIPTS^{™}, JAVA^{™}, JAVASCRIPT^{™}, PERL^{™}, PHP^{™}, PYTHON^{™}, WEBOBJECTS^{™}, etc. The mail server may utilize communication protocols such as Internet Message Access Protocol (IMAP), Messaging Application Programming Interface (MAPI), MICROSOFT^{R} exchange, Post Office Protocol (POP), Simple Mail Transfer Protocol (SMTP), or the like. In some embodiments, the computer system 700 may implement a mail client stored program component. The mail client (not shown in Figure) may be a mail viewing application, such as APPLE^{R} MAIL^{™}, MICROSOFT^{R} ENTOURAGE^{™}, MICROSOFT^{R} OUTLOOK^{™}, MOZILLA^{R} THUNDERBIRD^{™}, etc.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include Random Access Memory (RAM), Read-Only Memory (ROM), volatile memory, non-volatile memory, hard drives, Compact Disc Read-Only Memory (CD ROMs), Digital Video Disc (DVDs), flash drives, disks, and any other known physical storage media.

Thus, embodiments of the present disclosure provides a method and a system for version management in Distributed Control Systems (DCSs). The present disclosure provides efficient version management for a microservice-based DCS having plurality of microservices. Herein, each object of the DCS includes corresponding model service associated with each source file for the object. The corresponding model service stores versions of the source file associated with the object. As a result, complexity of maintaining versions and executing operations in a microservice based DCS is reduced advantageously. The present disclosure provides improved control over the DCS by keeping a track of changes (different versions) made to the one or more source files over time.. Moreover, previous versions of files or configurations can be viewed and restored if necessary, enabling better management of the DCS. The present disclosure also enhances collaboration among users of the DCS by providing a central repository for control system files and configurations such that each user can work on their own copy of the files and then merge their changes into the main repository. Moreover, the present disclosure increases efficiency of the users by enabling easy comparison of different versions of files or configurations to identify and fix any issues that may arise, reducing the time and effort required while working with the DCS. The present disclosure also provides better data management for the DCS by offering a detailed history of changes made for the source files, including details of users by whom the changes are performed and timing of the same ; which can be used for troubleshooting, maintenance, and auditing purposes. Finally, the present disclosure aids in compliance with industry regulations and standards by providing a clear audit trail of changes made to the control system. This can be particularly beneficial in industries that are highly regulated, such as pharmaceuticals, chemicals, or energy.

The terms "an embodiment", "embodiment", "embodiments", "the embodiment", "the embodiments", "one or more embodiments", "some embodiments", and "one embodiment" mean "one or more (but not all) embodiments of the invention(s)" unless expressly specified otherwise.

The terms "including", "comprising", "having" and variations thereof mean "including but not limited to", unless expressly specified otherwise.

The enumerated listing of items does not imply that any or all of the items are mutually exclusive, unless expressly specified otherwise. The terms "a", "an" and "the" mean "one or more", unless expressly specified otherwise.

A description of an embodiment with several components in communication with each other does not imply that all such components are required. On the contrary a variety of optional components are described to illustrate the wide variety of possible embodiments of the invention.

When a single device or article is described herein, it will be readily apparent that more than one device/article (whether or not they cooperate) may be used in place of a single device/article. Similarly, where more than one device or article is described herein (whether or not they cooperate), it will be readily apparent that a single device/article may be used in place of the more than one device or article, or a different number of devices/articles may be used instead of the shown number of devices or programs. The functionality and/or the features of a device may be alternatively embodied by one or more other devices which are not explicitly described as having such functionality/features. Thus, other embodiments of the invention need not include the device itself.

The illustrated operations of Figure 3 shows certain events occurring in a certain order. In alternative embodiments, certain operations may be performed in a different order, modified, or removed. Moreover, steps may be added to the above described logic and still conform to the described embodiments. Further, operations described herein may occur sequentially or certain operations may be processed in parallel. Yet further, operations may be performed by a single processing unit or by distributed processing units.

Finally, the language used in the specification has been principally selected for readability and instructional purposes, and it may not have been selected to delineate or circumscribe the inventive subject matter. It is therefore intended that the scope of the invention be limited not by this detailed description, but rather by any claims that issue on an application based here on. Accordingly, the disclosure of the embodiments of the invention is intended to be illustrative, but not limiting, of the scope of the invention, which is set forth in the following claims.

While various aspects and embodiments have been disclosed herein, other aspects and embodiments will be apparent to those skilled in the art. The various aspects and embodiments disclosed herein are for purposes of illustration and are not intended to be limiting, with the true scope being indicated by the following claims.

### Referral Numerals:

| **Referral number** | **Description** |
|---|---|
| 100 | Exemplary environment |
| 101 | Distributed control system |
| 102 | Plurality of devices |
| 103 | Version Management system |
| 200 | Processor |
| 201 | I/O interface |
| 202 | Memory |
| 203 | Auxiliary Modules |
| 204 | Auxiliary Data |
| 205 | Input module |
| 206 | File retrieving module |
| 207 | Version retrieving module |
| 208 | Operation execution module |
| 209 | Other modules |
| 210 | Input data |
| 211 | Version data |
| 212 | Source file data |
| 213 | Operation data |
| 214 | Other data |
| 400 | Engineering system |
| 401 | Version management system |
| 402 | Standard version control system |
| 403 | Source |
| 404 | Source management system |
| 405 | Engineering directory service |
| 406 | Model service |
| 407 | Model service |
| 410 | Actor |
| 412 | Tool |
| 414 | Difference tool |
| 416 | Model conflict tool |
| 501 | Offline engineering: Branch |
| 502 | Simulation and testing: Branch |
| 503 | Production: Branch |
| 504 | Engineering main |
| 505 | Engineer 1 local |
| 506 | Engineer 2 local |
| 507 | Simulation main |
| 508 | Tester 1 local |
| 509 | Production main |
| 510 | Production local |
| 600 | Visualization of differences |
| 601 | First version |
| 602 | Second version |
| 700 | Computer system |
| 701 | I/O interface |
| 702 | Processor |
| 703 | Network interface |
| 704 | Storage interface |
| 705 | Memory |
| 706 | User interface |
| 707 | Operating system |
| 708 | Web browser |
| 709 | Input device |
| 710 | Output device |
| 711 | Communication network |

## Claims

1. A method of version management for Distributed Control Systems (DCSs), wherein the method comprises:
retrieving, by a processor, one or more source files related to one or more objects corresponding to a function of a device of a DCS from a data repository associated with the DCS, based on receiving a request from one or more users associated with the DCS;
retrieving, by the processor, one or more versions of the one or more source files, from one or more model services corresponding to the one or more source files;
executing, by the processor, one or more operations for the device of the DCS based on one or more user inputs, wherein the one or more operations are executed based on the one or more source files from the data repository and the one or more versions from the one or more model services; and
managing, by the processor, the one or more versions of the one or more source files based on execution of the one or more operations.

2. The method as claimed in claim 1, wherein the one or more operations comprise at least one of: a change history operation, a roll-back/revert operation, a difference presentation operation, a concurrent multi-user operation, a merge operation, and a conflict resolution operation, wherein the change history operation comprises changing at least one portion in a historical version of the one or more versions, wherein the difference presentation operation comprises presenting differences between two or more versions, and wherein the concurrent multi-user operation comprises providing the one or more versions simultaneously to the one or more users.

3. The method as claimed in claim 2, wherein the merge operation comprises:
determining, by the processor, a first set of one or more differences amongst each of the one or more versions of the one or more source files and determining a second set of one or more differences between each of the one or more versions and the one or more source files simultaneously; and
integrating, by the processor, the one or more versions in the one or more source files, based on the first and second set of one or more differences.

4. The method as claimed in any of claims 2 to 3, wherein the roll-back/revert operation comprises rolling back to a previous version of the one or more source files maintained at the one or more model services, wherein rolling back is performed by at least one of:
resetting to a previous version of the one or more source files; and
restoring one or more changes selected by the user from a previous version of the one or more source files.

5. The method as claimed in any of claims 2 to 4, wherein the conflict resolution operation comprises:
determining, by the processor, one or more conflicts amongst each of the one or more versions of the one or more source files and between each of the one or more versions and the one or more source files; and
resolving, by the processor, the one or more conflicts by modifying the one or more versions of the one or more source files, based on user inputs.

6. The method as claimed in any of claims 1 to 5, further comprising displaying, by the processor, at least one of the one or more versions of the one or more source files and differences between the one or more versions of the one or more source files, in one of a graphical representation, a non-graphical representation.

7. The method as claimed in any of claims 1 to 6, wherein the one or more operations are executed stage-wise for each of a plurality of stages in the DCS.

8. A version management system for a Distributed Control Systems (DCSs), the system comprising:
a processor; and
a memory, wherein the memory stores processor-executable instructions, which, on execution, causes the processor to:
retrieve one or more source files related to one or more objects corresponding to a function of a device of a DCS from a data repository associated with the DCS, on receiving a request from one or more users associated with the DCS;
retrieve one or more versions of the one or more source files from one or more model services corresponding to the one or more source files;
execute one or more operations for the device of the DCS based on one or more user inputs, wherein the one or more operations are executed based on the one or more source files from the data repository and the one or more versions from the one or more model services; and
manage one or more versions of the one or more source files based on execution of the one or more operations.

9. The version management system as claimed in claim 8, wherein the one or more operations comprise at least one of: a change history operation, a roll-back/revert operation, a difference presentation operation, a concurrent multi-user operation, a merge operation, and a conflict resolution operation, wherein the change history operation comprises changing at least one portion in a historical version of the one or more versions, the difference presentation operation comprises presenting differences between two or more versions, and the concurrent multi-user operation comprises providing the one or more versions simultaneously to the one or more users.

10. The version management system as claimed in claim 9, wherein the processor performs the merge operation by:
determining a first set of differences amongst each of the one or more versions of the one or more source files and determining a second set of one or more differences between each of the one or more versions and the one or more source files simultaneously; and
integrating the one or more versions in the one or more source files, based on the first and second set of one or more differences.

11. The version management system as claimed in any of claims 9 to 10, wherein the processor performs the rollback/revert operation by rolling back to a previous version of the one or more source files maintained at the one or more model services, wherein rolling back is performed by at least one of:
resetting to a previous version of the one or more source files; and
restoring one or more changes selected by the user from a previous version of the one or more source files.

12. The version management system as claimed in any of claims 9 to 11, wherein the processor performs the conflict resolution operation by:
determining one or more conflicts amongst each of the one or more versions of the one or more source files and between each of the one or more versions and the one or more source files; and
resolving the one or more conflicts by modifying the one or more versions of the one or more source files, based on user inputs.

13. The version management system as claimed in any of claims 8 to 12, wherein the processor is configured to display at least one of the one or more versions of the one or more source files and differences between the one or more versions of the one or more source files, in one of a graphical representation, a non-graphical representation.

14. The version management system as claimed in any of claims 8 to 13, wherein the DCS is implemented in a microservice based architecture.

15. The version management system as claimed in any of claims 8 to 14, wherein the processor executes the one or more operations stage-wise for each of a plurality of stages in the DCS.
